(19) Europäisches Patentamt
European Patent Office
Office européen des brevets

(11) **EP 4 502 532 B1**

(12) **EUROPEAN PATENT SPECIFICATION**

(45) Date of publication and mention
of the grant of the patent:
**18.02.2026 Bulletin 2026/08**

(21) Application number: **24709289.3**

(22) Date of filing: **06.02.2024**

(51) International Patent Classification (IPC):
**G01B 11/24** (2006.01)          **G01B 21/04** (2006.01)

(52) Cooperative Patent Classification (CPC):
**G01B 11/24; G01B 21/042**

(86) International application number:
**PCT/CN2024/076290**

(87) International publication number:
**WO 2024/255283 (19.12.2024 Gazette 2024/51)**

(54) **CONTOUR TRIANGULATION METHOD BASED ON WIDE SPECTRUM LIGHT SOURCE**

KONTURENTRIANGULATIONSVERFAHREN AUF BASIS EINER BREITSPEKTRUMLICHTQUELLE

PROCÉDÉ DE TRIANGULATION DE CONTOUR FAISANT APPEL À UNE SOURCE DE LUMIÈRE À LARGE SPECTRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.06.2023 CN 202310717630**
**16.06.2023 CN 202310717642**

(43) Date of publication of application:
**05.02.2025 Bulletin 2025/06**

(73) Proprietors:
• **Xiamen Weiya Intelligent Technology Co., Ltd**
**Huli District**
**Xiamen, Fujian 361000 (CN)**
• **Xiamen Leading Intelligent Generation Co., Ltd.**
**Huli District**
**Xiamen, Fujian 361000 (CN)**

(72) Inventor: **LIU, HaoWei**
**Xiamen, Fujian 361000 (CN)**

(74) Representative: **Chung, Hoi Kan**
**Mandarin IP Limited**
**7 Cherry Trees**
**Great Shelford**
**Cambridge CB22 5XA (GB)**

(56) References cited:
CN-A- 1 116 703          CN-A- 1 354 355
CN-A- 101 074 869        CN-A- 101 430 196
CN-A- 104 634 273        CN-A- 106 017 312
CN-A- 108 731 611        CN-A- 112 762 838
CN-A- 112 857 263        CN-A- 113 251 932
CN-A- 115 096 212        CN-A- 116 538 956
DE-A1- 19 954 684        JP-A- 2004 354 136
JP-A- 2007 147 299

## Description

### TECHNICAL FIELD

The present invention belongs to the technical field of light measurement and particularly relates to a 3D measuring method based on a broad spectrum light source.

### BACKGROUND

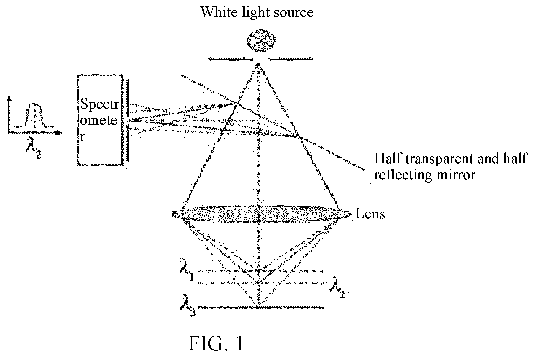

Laser triangulation measurement and spectral confocal imaging measurement are the most common 3D optical measurement modes. For example, JP 2007-147299 A discloses a method for determining the 3D shape of an object using a triangulation measurement device. In terms of cost and efficiency, the laser triangulation measurement is better. However, the laser triangulation measurement has a relatively high requirement on light source and uses collimated laser (narrow spectrum, with the spectral width less than 10 nm). The divergence angle of a beam is very small. The energy of reflected light is quite sensitive to changes in the angle, which results in a problem of poor imaging of a specularly reflected object. In comparison, the spectral confocal imaging measurement is superior to the laser triangulation measurement, and uses a focused light beam rather than a non-collimated beam. Its angle compatibility and imaging quality are better. In addition, the receiving lens and the transmitting lens of a spectral confocal sensor are same, so that the dispersion of the transmitting lens can be compensated. Then, a spectrum of the reflected light is analyzed with a spectrometer, so that the height of the reflected object is calculated, as shown in FIG. 1. However, a spectral confocal model uses a solution of dispersion confocal and spectral measurement, with a rather complex light path. Arrangement of the spectrometer further leads to a relatively large size and a relatively high cost. The cost of a common spectral confocal product is more than three times of that of laser triangulation, so that the acquisition cost is increased.

A broad spectrum usually refers to a spectrum with the spectral width larger than 10 nm. Different from the narrow spectrum with the spectral width less than 10 nm, an acquisition condition of the broad spectrum is relatively easy. Therefore, to overcome the above defects, the present invention provides a laser triangulation 3D measurement technology based on a broad spectrum.

### SUMMARY

An object of the present invention is to provide a method for measuring a triangular profile based on a broad spectrum light source and features a large tolerance angle, high compatibility, and a high measurement accuracy, and the volume and cost are greatly reduced.

To achieve the above object, the present invention adopts the following technical solution: a 3D measurement method based on a broad spectrum light source includes the following steps:

S1: building a model: arranging a laser triangulation measurement model in a dispersion area, the model comprising the broad spectrum light source, a dispersion lens, a displacement driving mechanism, a surface of a measured object, a high resolution imaging lens, an imaging detector, and a data processing system, where the broad spectrum light source arranged to emit a divergent beam; the dispersion lens is arranged to focus colored light with different colors of the divergent beam at different heights surface of the measured object to form a focused light beam, the surface of the measured object reflects the focused light beam at an angle to the high resolution imaging lens, the displacement driving mechanism is configured to drive displacement of the measured object placed thereon, a driving direction is perpendicular to an optical axis of the focused light beam, and the displacement driving mechanism is connected to the data processing system; the high resolution imaging lens focuses the reflected light beam to the imaging detector for imaging; and the imaging detector and the data processing system are configured to convert an optical signal into an electric signal and to generate data needed by 3D measurement;

S2: using a calibrator: first, putting the calibrator in place of the measured object in laser triangulation measurement model and setting a three-dimensional coordinate system, then measuring object plane coordinates (x, z) of the calibrator by virtue of a high precision measuring instrument, where the coordinate x represents a coordinate in a focused light beam direction and the coordinate z represents a vertical coordinate, and then acquiring image plane coordinates (u, v) in the imaging detector, where u is an element corresponding to the coordinate x and v is an element corresponding to the coordinate z;

establishing a mapping relation between the object plane coordinates and the image plane coordinates in the dispersion area by driving the calibrator to generate a relational expression of a two-variable linear function for calculation:

$$x_0 = au + bv + \delta_1 \qquad\qquad (1)$$

$$z_0 = cu + dv + \delta_2 \qquad\qquad (2)$$

where a, b, c, d, $\delta_1$ and $\delta_2$ all are coefficients;

displacing the calibrators repetitively to acquire object plane coordinates and corresponding image plane coordinates of a plurality of groups of calibrators, to substitute the plurality of groups of object plane coordinates and image plane coordinates into the equations (1) and (2) to solve values of a, b, c, d, $\delta_1$, and $\delta_2$, so as to finally obtain the coefficient-determined relational expression of the two-variable linear function; and

S3: measuring 3D size data of the measured object: putting the measured object in the laser triangulation measurement model, calculating coordinates x and y of each point of the surface of the measured object through the values u and v and the relational expression of the two-variable linear function, where n points form a line and n lines form a plane, to obtain a profile of the surface of the measured object; moreover, driving, by the displacement driving mechanism, the measured object to displace in a y direction perpendicular to the optical axis of the focused light beam; segmenting, by the displacement driving mechanism, a plurality of sections of displacement units in the y direction, and thereby recording the displacement units of the profile of the surface of measured object from its appearance in the image plane coordinates to its disappearance in the image plane coordinates; and finally, taking the sum of the recorded displacement units to obtain a coordinate y of the measured object, and splicing the object plane profiles (x, y) in each displacement unit to obtain a whole object surface profile of the measured object, to obtain a 3D size of the whole measured object, comprising coordinates x, y and z of any point on the measured object, so as to acquire a flaw depth or height at the surface of the measured object.

Further, the step S3 is replaced as follows: putting the measured object in the laser triangulation measurement model, calculating coordinates x and y of each point of the surface of the measured object through the values u and v and the relational expression of the two-variable linear function, where n points form a line and n lines form a plane, to obtain a profile of the surface of the measured object; moreover, driving, by the displacement driving mechanism, the measured object to displace in a y direction perpendicular to the optical axis of the focused light beam, arranging a stepping motor in the displacement driving mechanism, first setting a step pitch of the stepping motor, then recording the displacement units of the profile of the surface of the measured object from appearance in the image plane coordinates to disappearance in the image plane coordinates; and finally, converting the pulse quantity into a displacement to obtain a coordinate y of the measured object, and splicing the object plane profiles (x, y) within the displacement distance to obtain a whole object surface profile of the measured object, to obtain a 3D size of the whole measured object, including coordinates x, y and z of any point on the measured object, so as to acquire a flaw depth or height at the surface of the measured object.

Further, the broad spectrum light source is a point spectrum, and the imaging detector is a linear array detector.

Further, the broad spectrum light source is a multi-point spectrum, and the imaging detector is a multi-linear array detector.

Further, the broad spectrum light source is a line light source, and the imaging detector is an area array detector.

Further, the dispersion lens performs is arranged to disperse the light emitted by the broad spectrum light source, and the high resolution imaging lens is a common imaging lens without dispersion.

Further, the surface of the measured object is located between the dispersion lens and the high resolution imaging lens.

Further, the imaging detector and the data processing system are located on a focal plane of the high resolution imaging lens.

Further, in the step S2, a mapping relation between the object plane coordinates and the image plane coordinates in the dispersion area is established by driving the calibrator to generate a relational expression of a two-variable linear function for calculation;

in the step S3, the measured object is put in the laser triangulation measurement model, wherein the imaging detector acquires the image plane coordinates (u, v) of the surface of the measured object, and in the "ux-xz" comparison table, the object plane coordinates (x, z) of the corresponding point can be determined through the values u and v, and the coordinates x and z of each point of the surface of the measured object are calculated by inquiring the "ux-xz" comparison table or by the relational expression of the two-variable linear function.

Further, the laser triangulation measurement model is scanned to obtain a transversal line, a polyline or a surface profile and a multilayered structure of a target measured object.

By adopting the above-mentioned solution, the present invention has the following beneficial effects:

By virtue of the broad spectrum light source, the emitted light wave can be decomposed into different convergent beams and forms light with a convergent wavelength at different heights. The major wavelength of object reflection is the convergent wavelength. Therefore, the beam has a little change at different heights. A problem that the convergent beam is widened in a defocused state can be solved, so that a good measurement precision of the measurement model can be kept with a large height range.

In the prior art, a receiving lens and a transmitting lens of a spectral confocal sensor are same. Dispersion of the transmitting lens needed to be compensated, and then a spectrum of the reflected light is analyzed with a spectrometer, so that 3D size data of the reflected object is calculated. A receiving end in the present invention uses the laser triangulation receiving lens without compensating the dispersion, can image directly and is free of the spectrometer, so that the light path is simplified. In addition, the overall structure of the system is simpler, and the volume and cost can be greatly reduced, so that a more superior measurement precision can be achieved. The dispersion lens provided in the present invention can focus light with different wavelengths of the broad spectrum light source to different height of an object plane. With respect to the focused light beam, the reflected light has a certain divergence angle, so that the tolerability of the model to the degree of inclination of the surface of the object is improved, and the measurement precision is also improved. Therefore, the model provided by the present invention can measure specularly reflected objects such as a metal and glass, and also can measure objects with radians or steps on the surfaces such as 3D glass, grooves and weld joints.

Compared with the prior art, the present invention also has the advantages that the broad spectrum beam has the certain divergence angle. Therefore, even a detected target surface is specularly reflected. The reflected beam has the certain divergence angle, so that the angular sensitivity of the measurement model is reduced, and the capacity of the model to detect the specularly reflected target is improved. For a diffuse reflection target, this broad spectrum lighting mode still has an advantage of improving the capacity of the measurement mode to detect bended and inclined surfaces. Compared with a linear laser system, the system features a relatively large tolerance angle and a relatively high measurement precision. Compared with the spectral confocal system, the volume and cost of the system can be greatly reduced. Therefore, a broad spectral beam system not only able to overcome defects of a linear laser system and a spectral confocal system, but also able to combine advantages of the two, so that the application scenarios and range of the measurement system can be effectively expanded.

## BRIEF DESCRIPTION OF DRAWINGS

FIG. 1 is a schematic diagram of an existing spectral confocal model;
FIG. 2 is a schematic structural diagram I of a laser triangulation measurement model based on a broad spectrum light source in an embodiment;
FIG. 3 is a schematic structural diagram I (imaging change) of a laser triangulation measurement model based on a broad spectrum light source in the embodiment;
FIG. 4 is a schematic diagram of a laser triangulation measurement model based on a broad spectrum light source in an embodiment; and
FIG. 5 is a schematic diagram of an imaging relationship between image plane coordinates and an object plane coordinates of the present invention.

Description of numerals: 1-spectrum light source; 2-dispersion lens; 3- surface of the measured object; 4-high resolution imaging lens; 5-imaging detector; 6- displacement driving mechanism.

## DESCRIPTION OF EMBODIMENTS

Embodiments of the present invention will be described below more completely. The present invention may have various embodiments, and adjustments and changes may be made in the embodiments. However, it shall be understood that it is not intended to limit the protection of the present invention in specific embodiments of the disclosure and the scope of the present invention is defined by the appended set of claims.

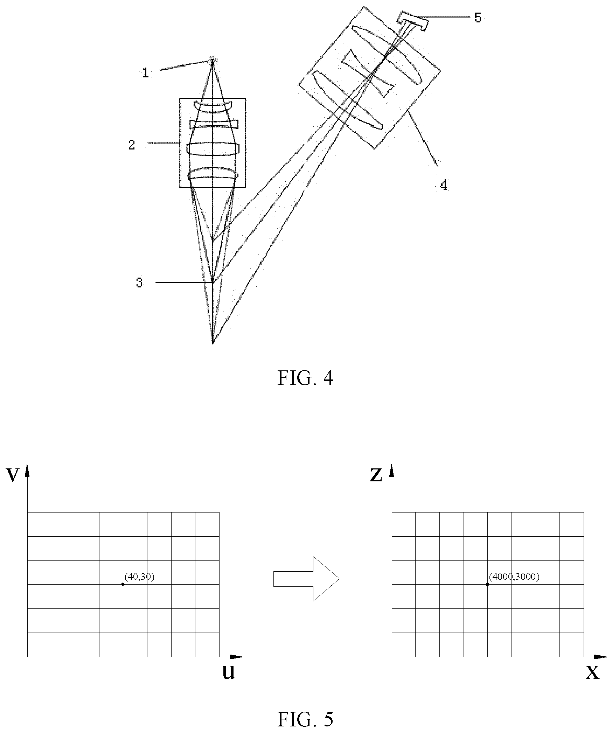

The present invention relates to a laser triangulation measurement model based on a broad spectrum light source, as shown in FIG. 4, including a broad spectrum light source 1, a dispersion lens 2, a surface of the measured object 3, a high resolution imaging lens 4, an imaging detector 5 and a data processing system, and a displacement driving mechanism 6.

The broad spectrum light source 1 transmits a divergent beam, the broad spectrum light source 1 is located in front of the dispersion lens 2, and the dispersion lens 2 disperses light of the broad spectrum light source 1;

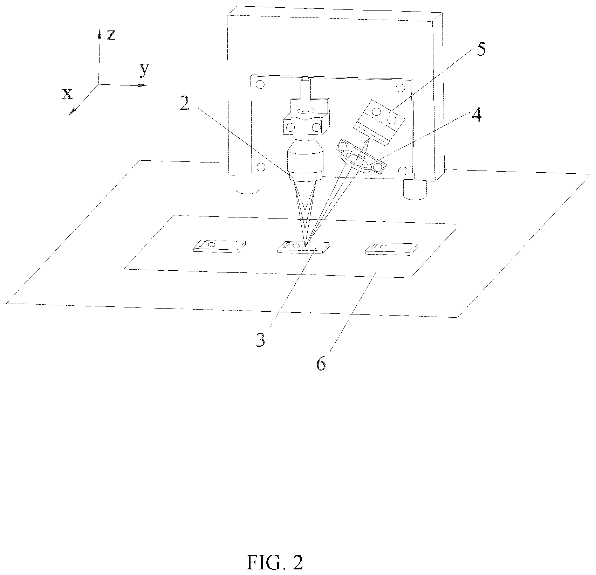

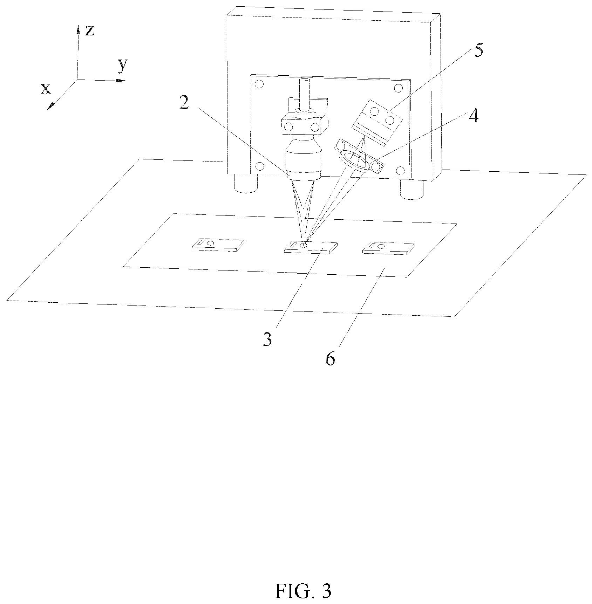

The dispersion lens 2 focuses colored light with different colors of the divergent beam to different heights of the surface of the measured object 3 to form a focused light beam. The displacement driving mechanism 6 is configured to place the measured object to drive the measured object to move, where a driving direction is perpendicular to an optical axis direction of the focused light beam. The surface of the measured object is located between the dispersion lens and the high resolution imaging lens, the surface of the measured object 3 reflects the focused light beam to the high resolution imaging lens 4, the high resolution imaging lens 4 focuses the reflected beam to the imaging detector 5 to image, and the imaging detector and the data processing system are located on a focal plane of the high resolution imaging lens. When there are flaws such as depressions on the surface of the measured object shown in FIG. 2 and FIG. 3, the reflected beam changes, so that the image on the imaging detector 5 changes as well. The imaging detector 5 converts a light signal into an electric signal and transmits the electric signal to the data processing system. The data processing system generates data needed by 3D measurement. The displacement driving mechanism 6 is connected to the data processing system. In the solution, the displacement driving mechanism 6 can be mechanisms such as a conveyor belt and a transport disc capable of generating a displacement movement.

The present invention relates to a method for measuring a triangular profile based on a broad spectrum light source. The data processing system can realize 3D measurement by the following measurement methods, specifically including the following steps:

S1: building a model: arranging a laser triangulation measurement model in a dispersion area;

S2: using a calibrator: first, putting the calibrator replacing the measured object in the laser triangulation measurement model and setting a three-dimensional coordinate system, then measuring object plane coordinates (x, z) of the calibrator by virtue of a high precision measuring instrument (an infrared laser range finder, an interferometer and the like), where the coordinate x represents a coordinate in a focused light beam direction and the coordinate z represents a vertical coordinate, and then acquiring image plane coordinates (u, v) of the imaging detector, where u is an element corresponding to the coordinate x and v is an element corresponding to the coordinate z;

establishing a complete relation between the object plane coordinates and the image plane coordinates in the dispersion area by driving the calibrator to generate "uv-xz comparison table" or a relational expression of a two-variable linear function for calculation:

$$x_0 = au + bv + \delta_1 \qquad\qquad (1)$$

$$z_0 = cu + dv + \delta_2 \qquad\qquad (2)$$

where a, b, c, d, $\delta_1$ and $\delta_2$ all are coefficients;

driving the calibrators many times to acquire object plane coordinates and corresponding image plane coordinates of the plurality of groups of calibrators, to substitute a plurality of object plane coordinates and image plane coordinates into the equations (1) and (2) to solve values of a, b, c, d, $\delta_1$, and $\delta_2$, so as to finally obtain the coefficient-determined relational expression of the two-variable linear function, where the large the class number is, the more accurate the fitting is;

S3: measuring 3D size data of the measured object: putting the measured object in the laser triangulation measurement model, calculating coordinates x and y of the surface of the measured object by inquiring the "ux-xz comparison table" or through the relational expression of the two-variable linear function: superficially, detecting object plane coordinates (x, z) corresponding to each point on the measured object, where, for example, as shown in FIG. 5, values u and v of point coordinates (40, 30) of an image plane coordinate system on the left side are respectively 40 and 30, and x and z of the object plane coordinate system mapped to the right side calculated by the two-variable linear function are respectively 4000 and 3000, that is, the point coordinates of the object plane coordinates are (4000, 3000); therefore, n points form a line and n lines form a plane, to obtain a profile of the surface of the measured object; moreover, driving, by the displacement driving mechanism, the measured object to move relative to the optical axis of the focused light beam in the perpendicular direction, that is, supposing the driving direction as a y direction, segmenting, by the displacement driving mechanism, a plurality of sections of displacement units in the y direction, where the large the number of segments of the arranged displacement units is, the more accurate the data is, thus recording the displacement units of the profile of the surface of the measured object from appearance in the image plane coordinates to disappearance in the image plane coordinates; and finally, adding the recorded displacement units to obtain a coordinate y of the measured object, and splicing the object plane profiles (x, y) in each displacement unit to obtain a whole object plane profile of the measured object, to obtain a 3D size of the whole measured object, including coordinates x, y and z of any point on the measured object, so as to acquire a flaw depth or height at the surface of the measured object, where the higher the density of the displacement units is, the finer the 3D size is and the higher the measured flaw precision is;

or, arranging a stepping motor in the displacement driving mechanism, first setting a step pitch of the stepping motor, then recording a pulsed quantity of the measured object from appearance of the object plane profile in the image plane coordinates to disappearance in the image plane coordinates; and finally, converting the pulse quantity into a displacement to obtain the coordinate y of the measured object, and similarly, splicing the object plane profiles (x, y) within the displacement distance to obtain a whole object plane profile of the measured object, to obtain the 3D size of the whole measured object, including coordinates x, y and z of any point on the measured object, so as to acquire a flaw depth or brightness on the surface of the measured object.

The calibrator can be an object in any shape, for example, a calibration block, a calibration board and the like.

The broad spectrum light source provided by the present invention can be a single-point spectrum, so that a single-point measurement mode is obtained; can be a multipoint spectrum, so that a multipoint measurement model is obtained; and can also be a linear light source, so that a linear measurement mode is obtained; and correspondingly, the imaging detector can be either a linear array detector or a multi-linear array detector or an area array detector. The laser triangulation measurement model is scanned to obtain a transversal line, a polyline or a surface profile and a multilayered structure of a target measured object.

The dispersion lens provided in the present invention can focus light with different wavelengths of the broad spectrum light source to different height of an object plane. With respect to the focused light beam, the reflected light has a certain divergence angle, so that the tolerability of the model to the degree of inclination of the surface of the object is improved, and the measurement precision is also improved. Therefore, the model provided by the present invention can measure specularly reflected objects such as a metal and glass, and also can measure objects with radians or steps on the surfaces such as 3D glass, grooves and weld joints.

The high resolution imaging lens provided by the present invention is a common imaging lens that corrects the chromatic aberration and performs measurement dependent on measurement of the height of the focused light beam rather than color. Without the need to differentiate the colors, a subsequent spectrum measurement mode is omitted, so that a relatively large cost and space are saved. Just because of this, the model has a higher precision than a common laser triangulation measurement model, and has more excellent cost performance than the spectral confocal model.

The imaging detector and the data processing system provided by the present invention include the imaging detector and the data processing system. According to different light sources, the imaging detector can be a single-linear, multi-linear or area array, so as to form a single-point, multi-point or liner measurement model. The data processing system converts signals detected by the imaging detector into data information and stores the data information, and has high speed signal processing and transmission functions.

Because the light transmitted by the broad spectrum light source is the focused light beam dispersed by the dispersion lens, light with different wavelengths is focused at different height, and therefore, there will be focused wavelength at each height, and the major wavelength reflected by the object is the focused wavelength. Because the beams with different wavelengths are convergent, the width of the beam changes a little at different heights. A problem that the convergent beam is widened in a defocused state can be solved, so that a better measurement precision of the system can be kept with a large height range. The receiving end uses a laser triangulation receiving lens rather than a spectral measurement mode. Such a system is relatively simple in structure, and the volume and cost can be greatly reduced. Such a structure combines advantages of spectral confocal measurement and laser triangulation measurement and overcomes shortcomings of the two, so that the application scenarios and scope of the measurement system are expanded.

The method for measuring a triangular profile based on a broad spectrum light source provided by the embodiment of the patent is introduced in detail. Particular examples are used herein to explain the principle and embodiments of the patent, and the above description of the embodiments is only used to help understanding the methods and core concept of the patent. Moreover, alternations will be made by those of ordinary skill in the art on the specific embodiments and application range in accordance with the thought of the patent. In conclusion, the content of the description shall not be construed as limitation to the patent.

**Claims**

**1.** A 3D measurement method based on a broad spectrum light source, comprising the following steps:

S1: building a model: arranging a laser triangulation measurement model in a dispersion area, the model comprising the broad spectrum light source, a dispersion lens, a displacement driving mechanism, a surface of a measured object, a high resolution imaging lens, an imaging detector, and a data processing system, wherein the broad spectrum light source arranged to emit a divergent beam; the dispersion lens is arranged to focus colored light with different colors of the divergent beam at different heights of the surface of the measured object to form a focused light beam, the surface of the measured object reflects the focused light beam at an angle to the high resolution imaging lens, the displacement driving mechanism is configured to drive displacement of the measured object placed thereon, a driving direction is perpendicular to an optical axis of the focused light beam, and the displacement driving mechanism is connected to the data processing system; the high resolution imaging lens focuses the reflected light beam to the imaging detector for imaging; and the imaging detector and the data processing system are configured to convert an optical signal into an electric signal and to generate data needed by 3D measurement;

S2: using a calibrator: first, putting the calibrator in place of the measured object in the laser triangulation measurement model and setting a three-dimensional coordinate system, then measuring object plane coordinates (x, z) of the calibrator by virtue of a high precision measuring instrument, where the coordinate x represents a coordinate in a focused light beam direction and the coordinate z represents a vertical coordinate, and then acquiring image plane coordinates (u, v) in the imaging detector, where u is an element corresponding to the coordinate x and v is an element corresponding to the coordinate z;

establishing a mapping relation between the object plane coordinates and the image plane coordinates in the dispersion area by driving the calibrator to generate a relational expression of a two-variable linear function for calculation:

$$x_0 = au + bv + \delta_1 \qquad (1)$$

$$z_0 = cu + dv + \delta_2 \qquad (2)$$

where a, b, c, d, $\delta_1$ and $\delta_2$ all are coefficients;

displacing the calibrators repetitively to acquire object plane coordinates and corresponding image plane coordinates of a plurality of groups of calibrators, to substitute the plurality of groups of object plane coordinates and image plane coordinates into the equations (1) and (2) to solve values of a, b, c, d, $\delta_1$, and $\delta_2$, so as to finally obtain the coefficient-determined relational expression of the two-variable linear function; and

S3: measuring 3D size data of the measured object: putting the measured object in the laser triangulation measurement model, calculating coordinates x and y of each point of the surface of the measured object through the values u and v and the relational expression of the two-variable linear function, wherein n points form a line and n lines form a plane, to obtain a profile of the surface of the measured object; driving, by the displacement driving mechanism, the measured object to displace in a y direction perpendicular to the optical axis of the focused light beam; segmenting, by the displacement driving mechanism, a plurality of sections of displacement units in the y direction, and thereby recording the displacement units of the profile of the surface of measured object from its appearance in the image plane coordinates to its disappearance in the image plane coordinates; and taking the sum of the recorded displacement units to obtain a coordinate y of the measured object, and splicing the object plane profiles (x, y) in each displacement unit to obtain a whole object surface profile of the measured object, to obtain a 3D size of the whole measured object, comprising coordinates x, y and z of any point on the measured object, so as to acquire a flaw depth or height at the surface of the measured object.

2. The 3D measurement method based on a broad spectrum light source according to claim 1, wherein the step S3 is replaced as follows: putting the measured object in the laser triangular measurement model, calculating coordinates x and y of each point of the surface of the measured object through the values u and v and the relational expression of the two-variable linear function, wherein n points form a line and n lines form a plane, to obtain a profile of the surface of the measured object; driving, by the displacement driving mechanism, the measured object to displace in a y direction perpendicular to the optical axis of the focused light beam, arranging a stepping motor in the displacement driving mechanism, first setting a step pitch of the stepping motor, then recording a pulse quantity of the profile of the surface of the measured object from appearance in the image plane coordinates to disappearance in the image plane coordinates; and converting the pulse quantity into a displacement to obtain a coordinate y of the measured object, and splicing the object plane profiles (x, y) within the displacement distance to obtain a whole object surface profile of the measured object, to obtain the 3D size of the whole measured object, comprising coordinates x, y and z of any point on the measured object, so as to acquire a flaw depth or height at the surface of the measured object.

3. The 3D measurement method based on a broad spectrum light source according to claim 1, wherein the broad spectrum light source is a point spectrum, and the imaging detector is a linear array detector.

4. The 3D measurement method based on a broad spectrum light source according to claim 1, wherein the broad spectrum light source is a multi-point spectrum, and the imaging detector is a multi-linear array detector.

5. The 3D measurement method based on a broad spectrum light source according to claim 1, wherein the broad spectrum light source is a line light source, and the imaging detector is an area array detector.

6. The 3D measurement method based on a broad spectrum light source according to claim 1, wherein the dispersion lens is arranged to disperse the light emitted by the broad spectrum light source, and the high resolution imaging lens is a common imaging lens without dispersion.

7. The 3D measurement method based on a broad spectrum light source according to claim 1, wherein the surface of the measured object is located between the dispersion lens and the high resolution imaging lens.

8. The 3D measurement method based on a broad spectrum light source according to claim 1, wherein the imaging detector and the data processing system are located on a focal plane of the high resolution imaging lens.

9. The 3D measurement method based on a broad spectrum light source according to claim 1, wherein in the step S2, the mapping relation between the object plane coordinates and the image plane coordinates is established in the dispersion area by driving the calibrator to generate a "ux-xz" comparison table or the relational expression of the two-variable linear function;
in the step S3, the measured object is put in the laser triangulation measurement model, wherein the imaging detector acquires the image plane coordinates (u, v) of the measured object plane, and in the "ux-xz" comparison table, the object plane coordinates (x, z) of the corresponding point can be determined through the values u and v, and the coordinates x and z of each point of the measured object plane are calculated by inquiring the "ux-xz" comparison table or by the relational expression of the two-variable linear function.

10. The 3D measurement method based on a broad spectrum light source according to claim 1, wherein the laser triangulation measurement model is scanned to obtain a transversal line, a polyline or a surface profile and a multilayered structure of a target measured object.

**Patentansprüche**

1. A 3D measurement method based on a broad spectrum light source, comprising the following steps:

S1: Modellbau: Einrichten eines Laser-Triangulation-Messmodells in einem Dispersionsbereich, wobei das Modell eine breitbandige Lichtquelle, eine Dispersionslinse, einen Verschiebungsantrieb, eine Oberfläche eines zu messenden Objekts, eine Hochauflösungs-Bildgebungslinse, einen Bildgebungs-Erkennungssensor und ein Datenverarbeitungssystem umfasst, wobei die breitbandige Lichtquelle so angeordnet ist, dass sie einen divergenten Strahl emittiert; die Dispersionslinse ist so angeordnet, dass sie farbiges Licht mit unterschiedlichen Farben des divergenten Strahls auf unterschiedlichen Höhen der Oberfläche des zu messenden Objekts fokussiert, um einen fokussierten Lichtstrahl zu bilden, die Oberfläche des zu messenden Objekts reflektiert den fokussierten Lichtstrahl unter einem Winkel zur Hochauflösungs-Bildgebungslinse, der Verschiebungsantrieb ist so konfiguriert, dass er die Verschiebung des auf ihm platzierten zu messenden Objekts antreibt, eine Bewegungsrichtung ist senkrecht zur optischen Achse des fokussierten Lichtstrahls, und der Verschiebungsantrieb ist mit dem Datenverarbeitungssystem verbunden; die Hochauflösungs-Bildgebungslinse fokussiert den reflektierten Lichtstrahl auf den Bildgebungs-Erkennungssensor zur Bildgebung; und der Bildgebungs-Erkennungssensor und das Datenverarbeitungssystem sind so konfiguriert, dass sie ein optisches Signal in ein elektrisches Signal umwandeln und die für die 3D-Messung benötigten Daten erzeugen.
S2: Verwendung eines Kalibrators: Zuerst wird der Kalibrator im Laser-Strahltriegelungs-Messmodell anstelle des Messobjekts platziert und ein dreidimensionales Koordinatensystem festgelegt. Anschließend werden die Objektebene-Koordinaten (x, z) des Kalibrators mit einem hochpräzisen Messgerät gemessen, wobei die Koordinate x eine Koordinate in Richtung des gebündelten Lichtstrahls und die Koordinate z eine vertikale Koordinate darstellt. Danach werden die Bildflächenkoordinaten (u, v) im Bildgebungsdetektor erfasst, wobei u ein Element entsprechend der Koordinate x und v ein Element entsprechend der Koordinate z ist.
Durch das Bewegen des Kalibriersatzes wird eine Abbildungsbeziehung zwischen den Objektbene-Koordinaten und den Bildbene-Koordinaten im Streubereich hergestellt, um einen funktionalen Ausdruck einer zweivariablen linearen Funktion für die Berechnung zu erzeugen:

$$x_0 = au + bv + \delta_1 \qquad\qquad (1)$$

$$z_0 = cu + dv + \delta_2 \qquad\qquad (2)$$

wobei a, b, c, d, $\delta 1$ und $\delta 2$ alle Koeffizienten sind;
die Kalibriermarker wiederholt verschieben, um die Objektebene-Koordinaten und die entsprechenden Bildkoordinaten mehrerer Gruppen von Kalibriermarkern zu ermitteln, die mehreren Gruppen von Objektebene-Koordinaten und Bildkoordinaten in die Gleichungen (1) und (2) einsetzen, um die Werte von a, b, c, d, $\delta1$ und $\delta2$ zu berechnen, um schließlich den koeffizientendeterminierten funktionalen Ausdruck der zweivariablen linearen Funktion zu erhalten; und

S3: Messung der 3D-Maßdaten des gemessenen Objekts: Das gemessene Objekt wird in das Laser-Triangulation-Messmodell gelegt, die Koordinaten x und y jeder Oberflächenpunkt des gemessenen Objekts werden durch die Werte u und v und den Zusammenhangsausdruck der zweivariablen linearen Funktion berechnet, wobei n Punkte eine Linie und n Linien eine Ebene bilden, um ein Profil der Oberfläche des gemessenen Objekts zu erhalten; durch den Verschiebungsantrieb wird das gemessene Objekt in y-Richtung senkrecht zur optischen Achse des fokussierten Lichtstrahls verschoben; durch den Verschiebungsantrieb werden mehrere Abschnitte der Verschiebeinheiten in y-Richtung segmentiert, wodurch die Verschiebeinheiten des Profils der Oberfläche des gemessenen Objekts von ihrer Sichtbarkeit in den Bildkoordinaten bis zu ihrer Verschwindung in den Bildkoordinaten aufgezeichnet werden; die aufgezeichneten Verschiebeinheiten werden addiert, um die y-Koordinate des gemessenen Objekts zu erhalten, und die Objektebene-Profile (x, y) in jedem Verschiebeabschnitt werden zusammengeführt, um das gesamte Oberflächenprofil des gemessenen Objekts zu erhalten, um die 3D-Maße des gesamten gemessenen Objekts zu ermitteln, einschließlich der Koordinaten x, y und z eines beliebigen Punkts auf dem gemessenen Objekt, um die Riss Tiefe oder Höhe an der Oberfläche des gemessenen Objekts zu erhalten.

2. Die 3D-Messmethode gemäß Anspruch 1, die auf einer breitbandigen Lichtquelle basiert, wobei Schritt S3 wie folgt ersetzt wird: das gemessene Objekt in das Laser-Dreiecksmessmodell einfügen, die Koordinaten x und y jeder Oberflächenpunktes des gemessenen Objekts durch die Werte u und v und die Beziehungsausdrücke der zweivariablen linearen Funktion berechnen, wobei n Punkte eine Linie und n Linien eine Ebene bilden, um eine Profil der Oberfläche des gemessenen Objekts zu erhalten; das gemessene Objekt durch den Verschiebungsantriebsmechanismus in y-Richtung senkrecht zur optischen Achse des fokussierten Lichtstrahls verschieben, einen Schrittmotor im Verschiebungsantriebsmechanismus anordnen, zunächst den Schrittabstand des Schrittmotors festlegen, dann die Pulsanzahl des Profils der Oberfläche des gemessenen Objekts von der Sichtbarkeit in den Bildkoordinaten bis zur Verschwindung in den Bildkoordinaten aufzeichnen; die Pulsanzahl in eine Verschiebung umwandeln, um die y-Koordinate des gemessenen Objekts zu erhalten, und die Objektebene-Profile (x, y) innerhalb des Verschiebungsabstands zusammenfügen, um ein vollständiges Objetoberflächenprofil des gemessenen Objekts zu erhalten, um die 3D-Größe des gesamten gemessenen Objekts zu ermitteln, einschließlich der Koordinaten x, y und z eines beliebigen Punkts auf dem gemessenen Objekt, um die Riss Tiefe oder Höhe an der Oberfläche des gemessenen Objekts zu ermitteln.

3. Die 3D-Messmethode gemäß Anspruch 1, die auf einer breitbandigen Lichtquelle basiert, wobei die breitbandige Lichtquelle ein Punktspektrum ist und das Bildgebungsdetektor ein lineares Array-Detektor.

4. Die 3D-Messmethode gemäß Anspruch 1, die auf einer Breitbandlichtquelle basiert, wobei die Breitbandlichtquelle ein Mehrpunkt-Spektrum ist und der Bildgebungs-Detektor ein Mehrfach-Linienarray-Detektor.

5. Die 3D-Messmethode gemäß Anspruch 1, die auf einer Breitbandlichtquelle basiert, wobei die Breitbandlichtquelle eine Linienlichtquelle ist und der Bildgebungsdetektor ein Flächenarray-Detektor.

6. Die 3D-Messmethode gemäß Anspruch 1, die auf einer breitbandigen Lichtquelle basiert, wobei die Dispersionslinse so angeordnet ist, dass das von der breitbandigen Lichtquelle emittierte Licht zerstreut wird, und die hochauflösende Abbildungslinse eine gewöhnliche Abbildungslinse ohne Dispersion ist.

7. Die 3D-Messmethode gemäß Anspruch 1 basierend auf einer Breitbandlichtquelle, wobei die Oberfläche des Messobjekts zwischen der Dispersionslinse und der Hochauflösungsbildgebungslinse angeordnet ist.

8. Die 3D-Messmethode gemäß Anspruch 1, die auf einer Breitbandlichtquelle basiert, wobei das Bildgebungsdetektor und das Datenverarbeitungssystem auf der Fokalebene der hochauflösenden Abbilungslinse angeordnet sind.

9. Die 3D-Messmethode gemäß Anspruch 1, die auf einer breitbandigen Lichtquelle basiert, wobei in Schritt S2 die Abbildungsbeziehung zwischen den Objektflächenkoordinaten und den Bildflächenkoordinaten im Dispersionsbereich durch Verschieben des Kalibriersystems aufgestellt wird, um eine "ux-xz"-Vergleichstabelle oder den funktionalen Ausdruck der zweivariablen linearen Funktion zu erzeugen.
Im Schritt S3 wird das Messobjekt in das Laser-Triangulation-Messmodell gelegt, wobei der Bildaufnehmer die Bildkoordinaten (u, v) der Messobjektoberfläche erfasst. In der "ux-xz"-Vergleichstabelle können die Objektkoordinaten (x, z) des entsprechenden Punktes durch die Werte u und v bestimmt werden, und die Koordinaten x und z jeder Punktes der Messobjektoberfläche werden durch Abfrage der "ux-xz"-Vergleichstabelle oder durch die Beziehungsausdrücke der zweivariablen linearen Funktion berechnet.

10. The 3D measurement method based on a broad spectrum light source according to claim 1, wherein the laser triangulation measurement model is scanned to obtain a transversal line, a polyline or a surface profile and a multilayered structure of a target measured object.

**Revendications**

1. A 3D measurement method based on a broad spectrum light source, comprising the following steps:

S1 : Construire un modèle : disposer un modèle de mesure par triangulation laser dans une zone de dispersion, le modèle comprenant une source de lumière à large spectre, une lentille de dispersion, un mécanisme de déplacement d'entraînement, une surface d'un objet mesuré, une lentille d'imagerie haute résolution, un détecteur d'imagerie et un système de traitement de données, dans lequel la source de lumière à large spectre est disposée pour émettre un faisceau divergent ; la lentille de dispersion est disposée pour focaliser la lumière colorée de différentes couleurs du faisceau divergent à différentes hauteurs de la surface de l'objet mesuré pour former un faisceau lumineux focalisé, la surface de l'objet mesuré réfléchit le faisceau lumineux focalisé à un angle vers la lentille d'imagerie haute résolution, le mécanisme de déplacement d'entraînement est configuré pour entraîner le déplacement de l'objet mesuré placé dessus, une direction de mouvement est perpendiculaire à l'axe optique du faisceau lumineux focalisé, et le mécanisme de déplacement d'entraînement est connecté au système de traitement de données ; la lentille d'imagerie haute résolution focalise le faisceau lumineux réfléchi vers le détecteur d'imagerie pour l'imagerie ; et le détecteur d'imagerie et le système de traitement de données sont configurés pour convertir un signal optique en un signal électrique et générer les données nécessaires à la mesure 3D ;

S2 : Utilisation d'un étalonnage : premièrement, placer l'étalon à la place de l'objet mesuré dans le modèle de mesure par triangulation laser et définir un système de coordonnées tridimensionnel, puis mesurer les coordonnées du plan de l'objet (x, z) de l'étalon à l'aide d'un instrument de mesure de haute précision, où la coordonnée x représente une coordonnée dans la direction du faisceau lumineux focalisé et la coordonnée z représente une coordonnée verticale, puis acquérir les coordonnées du plan image (u, v) dans le détecteur d'imagerie, où u est un élément correspondant à la coordonnée x et v est un élément correspondant à la coordonnée z ;

establishing a mapping relation between the object plane coordinates and the image plane coordinates in the dispersion area by moving the calibrator to generate a relational expression of a two-variable linear function for calculation:

$$x_0 = au + bv + \delta_1 \qquad (1)$$

$$z_0 = cu + dv + \delta_2 \qquad (2)$$

où a, b, c, d, $\delta_1$ et $\delta_2$ sont tous des coefficients ;

déplacer répétitivement les calibres pour acquérir les coordonnées du plan de l'objet et les coordonnées correspondantes du plan de l'image de plusieurs groupes de calibres, substituer les coordonnées du plan de l'objet et du plan de l'image de plusieurs groupes dans les équations (1) et (2) pour résoudre les valeurs de a, b, c, d, $\delta_1$ et $\delta_2$, afin d'obtenir finalement l'expression relationnelle déterminée par les coefficients de la fonction linéaire à deux variables ; et

S3 : Mesurer les données de taille 3D de l'objet mesuré : placer l'objet mesuré dans le modèle de mesure par triangulation laser, calculer les coordonnées x et y de chaque point de la surface de l'objet mesuré à travers les valeurs u et v et l'expression relationnelle de la fonction linéaire à deux variables, où n points forment une ligne et n lignes forment un plan, pour obtenir un profil de la surface de l'objet mesuré ; faire se déplacer l'objet mesuré dans une direction y perpendiculaire à l'axe optique du faisceau lumineux focalisé par le mécanisme de déplacement ; segmenter, par le mécanisme de déplacement, plusieurs sections d'unités de déplacement dans la direction y, et ainsi enregistrer les unités de déplacement du profil de la surface de l'objet mesuré depuis leur apparition dans les coordonnées du plan image jusqu'à leur disparition dans les coordonnées du plan image ; et prendre la somme des unités de déplacement enregistrées pour obtenir la coordonnée y de l'objet mesuré, et assembler les profils du plan objet (x, y) dans chaque unité de déplacement pour obtenir un profil complet de la surface de l'objet mesuré, afin d'obtenir une taille 3D de l'objet mesuré entier, comprenant les coordonnées x, y et z de n'importe quel point sur l'objet mesuré, afin d'acquérir une profondeur ou une hauteur de défaut à la surface de l'objet mesuré.

2. La méthode de mesure 3D basée sur une source lumineuse à large spectre selon la revendication 1, dans laquelle l'étape S3 est remplacée comme suit : placer l'objet mesuré dans le modèle de mesure triangulaire laser, calculer les coordonnées x et y de chaque point de la surface de l'objet mesuré à travers les valeurs u et v et l'expression relationnelle de la fonction linéaire à deux variables, où n points forment une ligne et n lignes forment un plan, pour obtenir un profil de la surface de l'objet mesuré ; faire déplacer l'objet mesuré dans une direction y perpendiculaire à l'axe optique du faisceau lumineux focalisé par le mécanisme de déplacement, placer un moteur pas-à-pas dans le mécanisme de déplacement, définir d'abord le pas du moteur pas-à-pas, puis enregistrer la quantité d'impulsions du profil de la surface de l'objet mesuré depuis l'apparition dans les coordonnées du plan image jusqu'à la disparition dans les coordonnées du plan image ; convertir la quantité d'impulsions en déplacement pour obtenir la coordonnée y de l'objet mesuré, et assembler les profils du plan objet (x, y) dans la distance de déplacement pour obtenir un profil complet de la surface de l'objet mesuré, afin d'obtenir les dimensions 3D de l'objet mesuré entier, comprenant les coordonnées x, y et z de n'importe quel point sur l'objet mesuré, afin d'acquérir la profondeur ou la hauteur d'un défaut à la surface de l'objet mesuré.

3. La méthode de mesure 3D basée sur une source de lumière à large spectre selon la revendication 1, dans laquelle la source de lumière à large spectre est un spectre ponctuel et le détecteur d'imagerie est un détecteur à réseau linéaire.

4. La méthode de mesure 3D basée sur une source de lumière à large spectre selon la revendication 1, dans laquelle la source de lumière à large spectre est un spectre multipoint et le détecteur d'imagerie est un détecteur à réseau linéaire multiple.

5. La méthode de mesure 3D basée sur une source de lumière à large spectre selon la revendication 1, dans laquelle la source de lumière à large spectre est une source de lumière linéaire et le détecteur d'imagerie est un détecteur à réseau d'aire.

6. La méthode de mesure 3D selon la revendication 1, basée sur une source de lumière à large spectre, dans laquelle la lentille dispersante est disposée pour disperser la lumière émise par la source de lumière à large spectre, et la lentille d'imagerie haute résolution est une lentille d'imagerie commune sans dispersion.

7. La méthode de mesure 3D basée sur une source de lumière à large spectre selon la revendication 1, dans laquelle la surface de l'objet mesuré est située entre la lentille de dispersion et la lentille d'imagerie haute résolution.

8. La méthode de mesure 3D basée sur une source lumineuse à large spectre selon la revendication 1, dans laquelle le détecteur d'imagerie et le système de traitement des données sont situés sur un plan focal de la lentille d'imagerie haute résolution.

9. La méthode de mesure 3D basée sur une source de lumière à large spectre selon la revendication 1, dans laquelle, dans l'étape S2, la relation de mappage entre les coordonnées du plan objet et les coordonnées du plan image est établie dans la zone de dispersion en déplaçant le calibrateur pour générer un tableau de comparaison "ux-xz" ou l'expression de la fonction linéaire à deux variables.
Dans l'étape S3, l'objet mesuré est placé dans le modèle de mesure par triangulation laser, où le détecteur d'image acquiert les coordonnées du plan d'image (u, v) du plan de l'objet mesuré. Dans le tableau de comparaison "ux-xz", les coordonnées du plan de l'objet (x, z) du point correspondant peuvent être déterminées à travers les valeurs u et v, et les coordonnées x et z de chaque point du plan de l'objet mesuré sont calculées en interrogeant le tableau de comparaison "ux-xz" ou par l'expression relationnelle de la fonction linéaire à deux variables.

10. La méthode de mesure 3D basée sur une source de lumière à large spectre selon la revendication 1, dans laquelle le modèle de mesure par triangulation laser est scanné pour obtenir une ligne transversale, un polygone ou un profil de surface ainsi qu'une structure multicouche de l'objet mesuré cible.

FIG. 1

FIG. 2

FIG. 3

FIG. 4

FIG. 5

**EP 4 502 532 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007147299 A